# EUROPÄISCHE PATENTANMELDUNG

(11) **EP 2 642 229 A1**
(43) Veröffentlichungstag der Anmeldung: **25.09.2013**
(21) Anmeldenummer: 12002469.0
(22) Anmeldetag: 05.04.2012
(51) Int. Cl.: F25J 3/04, H02K 55/00

(54) **Luftzerlegungsanlage mit gekühlter Supraleiterstruktur**

(30) Priorität: 23.03.2012 DE 102012005768
(71) Anmelder: Linde Aktiengesellschaft, 80331 Munich (DE)
(72) Erfinder: Ferstl, Johann, Dr., 80995 München (DE); Windmeier, Christoph, Dr., 82538 Geretsried (DE)
(74) Vertreter: Imhof, Dietmar

(57) **Zusammenfassung**

Eine Luftzerlegungsanlage (10, 20, 30, 40) mit einer Luftzerlegereinheit (1), die einen tiefkalt verflüssigten Kälteträger bereitstellen kann, und mit einer elektrischen Einheit (2) mit einer Supraleiterstruktur (2b), wobei die elektrische Einheit (2) über eine energetische Verbindung (3) an die Luftzerlegereinheit (1) angebunden ist und eine Kühleinrichtung (2a) aufweist, wird vorgeschlagen, wobei die Kühleinrichtung (2a) dazu ausgebildet ist, die Supraleiterstruktur (2b) unter Verwendung zumindest eines Teils des tiefkalt verflüssigten Kälteträgers zu kühlen. Die entsprechende Verwendung eines tiefkalt verflüssigten Kälteträgers und entsprechendes Kühlverfahren sind ebenfalls Gegenstand der Erfindung.

## Beschreibung

Die Erfindung betrifft eine Luftzerlegungsanlage, die einen tiefkalt verflüssigten Kälteträger bereitstellen kann, und die eine elektrische Einheit mit einer Supraleiterstruktur mit einen Supraleiter aufweist, sowie die Verwendung eines tiefkalt verflüssigten Kälteträgers zur Kühlung einer derartigen Supraleiterstruktur und ein Verfahren zur Kühlung einer Supraleiterstruktur einer elektrischen Einheit einer Luftzerlegungsanlage.

### Stand der Technik

Die Entwicklung von Komponenten mit Hochtemperatursupraleitern (HTS) in Form von Strombegrenzern, Transformatoren, Generatoren und Motoren mit individuellen Nennleistungen im mittleren MW-Bereich wird derzeit intensiv betrieben. Als potentielle Einsatzfelder derartiger elektrischer Komponenten werden insbesondere Lokomotiven-und Schiffsantriebe angesehen, die direkt von einer Verringerung des Bauraums und des Gewichts von Hochtemperatursupraleiterbauteilen profitieren.

Die kryogene Luftzerlegung durch Verflüssigung und Rektifikation (Gegenstromdestillation) ist hinlänglich bekannt. Durch ein entsprechendes Verfahren lassen sich zumindest Stickstoff und Sauerstoff, in größeren Anlagen auch Argon, Krypton, Xenon, Helium und/oder Neon in reiner Form gewinnen.

Die Luftverflüssigung umfasst zunächst eine Verdichtung auf einen Verdichtungsenddruck von ca. 6 bar. Dies erfolgt üblicherweise in mehrstufigen Turbokompressoren mit Zwischen- und Nachkühlung. Die Abkühlung der komprimierten Luft erfolgt in einem oder in mehreren Wärmetauschern auf nahezu Verflüssigungstemperatur im Gegenstrom zu Stickstoffrestgas aus der Rektifikation.

Die Rektifikation selbst beruht prinzipiell auf einer Hintereinanderschaltung einer möglichst großen Anzahl an Destillationsschritten und wird in Rektifikationskolonnen mit einer entsprechenden Anzahl Trennstufen (Böden) durchgeführt. In unterschiedlichen Höhen der Kolonne können kryogen verflüssigte Gase oder Gasgemische mit unterschiedlichen Anteilen der Ausgangskomponenten entnommen werden. Vom Kopf der Kolonne entnommener Stickstoff wird, wie erwähnt, zumindest zum Teil zur Kühlung der Einsatzluft verwendet. Zur Gewinnung der Edelgase werden der Haupt-Rektifikationskolonne weitere Trennsäulen nachgeschaltet.

Sowohl zur eigentlichen Zerlegung als auch zur Verflüssigung der Luft sind beträchtliche Energiemengen, primär in Form von Kompressionsarbeit, erforderlich. Die Energie wird in der Regel elektrisch zur Verfügung gestellt. Die elektrische Energie kann dabei entweder aus einer externen Anbindung an ein Hoch- oder Mittelspannungsnetz stammen oder in einem lokalen Kraftwerksprozess erzeugt werden. Die Energie kann jedoch auch direkt als mechanische Arbeitsleistung einer Wärmekraftmaschine bereitgestellt werden.

Wird elektrische Energie aus einem externen oder internen Netz genutzt, addieren sich zu den Irreversibilitäten der Prozessführung und Maschinenkonstruktion die Wärmeverluste in Generatoren, Elektromotoren und Transformatoren.

Der Wirkungsgrad der in einer Luftzerlegungsanlage (LZA) eingesetzten elektrischen Bauteile liegt typischerweise, je nach Baugröße, bei Elektromotoren und Generatoren bei ca. 98% und bei Transformatoren bei ca. 95 bis 99%. Insgesamt gehen somit bei der Luftzerlegung bis über 5% der eingesetzten elektrischen Leistung in Form von Abwärme verloren.

Es besteht der Bedarf nach Verbesserungen in der Effizienz derartiger Anlagen.

### Offenbarung der Erfindung

Vor diesem Hintergrund schlägt die Erfindung eine Luftzerlegungsanlage, die einen tiefkalt verflüssigten Kälteträger bereitstellen kann, und die eine elektrische Einheit mit einer Supraleiterstruktur mit einen Supraleiter aufweist, sowie die Verwendung eines tiefkalt verflüssigten Kälteträgers zur Kühlung einer derartigen Supraleiterstruktur und ein Verfahren zur Kühlung einer Supraleiterstruktur einer elektrischen Einheit einer Luftzerlegungsanlage mit den Merkmalen der unabhängigen Ansprüche vor.

Bevorzugte Ausführungsformen sind Gegenstand der Unteransprüche und werden in der nachfolgenden Beschreibung weiter erläutert.

### Vorteile der Erfindung

Die Erfindung betrifft elektrische Einheiten einer Luftzerlegungsanlage mit einer Supraleiterstruktur, die über eine, vorzugsweise direkte, energetische Verbindung an die Luftzerlegereinheit angebunden sind. Die elektrischen Einheiten weisen Kühleinrichtungen auf, die erfindungsgemäß dazu ausgebildet sind, die Supraleiterstruktur unter Verwendung zumindest eines Teils des tiefkalt verflüssigten Kälteträgers der Luftzerlegungsanlage zu kühlen. Hieraus ergibt sich insbesondere bei der Verwendung von Hochtemperatursupraleitern eine Reihe von Vorteilen.

Hochtemperatursupraleiter sind eine Klasse keramischer Supraleiter mit besonders hohen Sprungtemperaturen. Die Grenze zwischen Nieder- und Hochtemperatursupraleitern wird dabei anwendungsorientiert bei einer Sprungtemperatur von 77 K (-196 °C, der Normalsiedetemperatur flüssigen Stickstoffs) gezogen. Kupferoxidhaltige Keramik-Hochtemperatursupraleiter (i.d.R. Perowskit-Derivate) erreichen Sprungtemperaturen von bis zu 138 K (-135 °C), was oberhalb der oben Siedetemperatur der üblicherweise einer Luftzerlegungsanlage entnehmbaren tiefkalt verflüssigten Kälteträger, insbesondere von flüssigem Stickstoff, ggf. auch von flüssigem Sauerstoff, liegt. Kann eine entsprechende Luftzerlegungsanlage weitere tiefkalt verflüssigte Kälteträger bereitstellen, z.B. Edelgase, können auch diese zur Kühlung von Hochtemperatursupraleitern eingesetzt werden.

Eine "Supraleiterstruktur" soll im Rahmen dieser Anmeldung eine Struktur oder ein Bauteil beschreiben, das einen entsprechenden Supraleiter aufweist. Dieser kann beispielsweise als Spule mit einem Spulenkern und einer Wicklung, z.B. in Form eines Stators eines Generators oder Motors oder in Form einer oder mehrerer Transformatorenspulen, ausgebildet sein. Auch Leitungen in einer entsprechenden Anlage können als Supraleiterstrukturen ausgebildet sein und beispielsweise einen mit einem Kühlmittel durchfluteten Mantel aufweisen. Eine Supraleiterstruktur kann damit also entsprechende Kühlmittelspeicher oder -führungen aufweisen. Beispielsweise kann eine Generatorspule in einem Kühlmittelspeicher (Dewar) eingetaucht sein und ist dort vollständig mit dem Kühlmittel, im Rahmen dieser Anmeldung dem tiefkalt verflüssigten Kälteträger, bedeckt.

Ist im Rahmen der Erfindung dabei von einem "tiefkalt verflüssigten Kälteträger" die Rede, sei hierunter jedes tiefkalt verflüssigte Gas oder Gasgemisch verstanden, das in der Luftzerlegungsanlage produziert wird, und das dieser entnommen werden kann. Vorzugsweise wird es sich hierbei um Stickstoff (mit entsprechenden Anteilen anderer Gase wie Sauerstoff) handeln, oder, wie zuvor angegeben, auch um Sauerstoff oder Edelgas(gemische). Auch die verflüssigte Einsatzluft kann verwendet werden. Diese wird vor der Einspeisung in die Trennkolonne entnommen. Prinzipiell eignet sich jedes Gas oder Gasgemisch, das im verflüssigten Zustand eine zur Kühlung eines verwendeten Supraleiters ausreichende Temperatur aufweist oder bei dem sich (z.B. durch Druckabsenkung wie unten erläutert) eine derartige Temperatur einstellen lässt.

Unter dem Begriff "Luftzerlegereinheit" seien die Komponenten der Luftzerlegungsanlage zusammengefasst, die direkt der Luftverflüssigung und -zerlegung dienen, also z.B. Kompressoren zur Verdichtung der Einsatzluft und/oder weiterer Gasströme, Wärmetauscher, Pumpen, Turbinen, Heizungen, Kondensatoren, Trennkolonnen und dergleichen. Wie erläutert erfolgt der Betrieb der Luftzerlegungsanlage in der Regel unter Verwendung elektrischer Energie, die Luftzerlegereinheit wird also mittels der erläuterten elektrischen Komponenten betrieben. Diese können auch baulich als Teil der genannten Komponenten ausgebildet sein. Hierbei kann es sich beispielsweise um Strombegrenzer, Transformatoren, Generatoren und Motoren handeln.

Die Erfindung ermöglicht es insbesondere, Wärmeverluste in den Spulenwindungen der genannten elektrischen Komponenten vollständig zu vermeiden. Es verbleiben allenfalls geringfügige Verluste in den zugehörigen Eisenkernen und, bei Generatoren bzw. Motoren, in der Wellenlagerung. Der Wirkungsgrad von Generatoren, Motoren und Transformatoren mit Hochtemperatursupraleitern liegt typischerweise oberhalb von 99,5%. Da, wie erwähnt, die genannten Hochtemperatursupraleiter bei der Siedetemperatur von flüssigem Stickstoff, oder nur knapp darunter, betrieben werden können, ist eine prozesstechnische Kopplung zur Luftzerlegungsanlage besonders vorteilhaft. Insbesondere flüssiger Stickstoff kann dabei direkt von der Luftzerlegereinheit zur Kühleinrichtung der entsprechenden Hochtemperatursupraleiterkomponente fließen. Die Erfindung ist insbesondere dann von Vorteil, wenn der energetische Aufwand zur Kompensation des Wärmeeinfalls aus der Umgebung geringer gehalten werden kann als der energetische Gewinn aus dem Einsatz des Supraleiters.

Ein weiterer Vorteil dieser Kopplung besteht darin, dass der tiefkalte Kälteträger nach der Verdampfung wieder der Luftzerlegeranlage in kaltem, gasförmigem Zustand zugeführt werden kann. Dadurch kann der Aufwand zur Verflüssigung des Kälteträgers um bis zu 50% reduziert werden.

Die Erfindung ermöglicht einen geringeren apparativen Aufwand gegenüber Anlagen mit separater Supraleiterkühlung, z.B. mittels eines eigenständigen, sekundären oder tertiären Helium- oder Stickstoffkreislaufs, da weniger Wärmetauscher und Maschinen erforderlich sind. Gleichzeitig zeigt die erfindungemäße Anlage einen höheren Wirkungsgrad, da keine treibenden Temperaturdifferenzen beim Wärmetausch zwischen dem Primärfluid und einem Sekundärkreislauf anfallen.

Im Rahmen der Erfindung erfolgt vorteilhafterweise ein Phasenübergang des Kälteträgers bei der Kühlung. Dies ermöglicht, beispielsweise im Gegensatz zu Anlagen, bei denen der Hochtemperatursupraleiter mit unterkühlter Flüssigkeit gekühlt wird, eine große Temperaturkonstanz und damit eine besonders gute Regelbarkeit. Hierbei kann, wie erwähnt, der verdampfte Kälteträger vorteilhafterweise der Luftzerlegeranlage wieder zugeführt werden, so dass keine diesbezüglichen Verluste entstehen.

Die vorliegende Erfindung kommt bei der Kühlung der Supraleiterstruktur vollständig ohne zusätzliche Kältemaschinen bzw. Kryokühler, also Einrichtungen zur Erzeugung von Kälte durch die Zufuhr von externer Arbeit, aus. Kältemaschinen implizieren zumindest die Zufuhr von Wärme auf einem tiefen und die Abfuhr von Wärme auf einem höheren Temperaturniveau und einen entsprechenden Energieaufwand. Hierauf kann erfindungsgemäß verzichtet werden.

Im Rahmen der Erfindung werden Komponenten der Luftzerlegungsanlage durch diese selbst gekühlt. Hierdurch ergeben sich kurze Wege und damit geringere Verluste und niedrigere Investitionen. Verfügbare Hochtemperatursupraleiter eignen sich hinsichtlich ihrer Leistungscharakteristika bis in den unteren MW-Bereich in besonderer Weise für die Anforderungen einer Luftzerlegungsanlage.

Die Baugröße und das Gewicht von erfindungsgemäß gekühlten elektrischen Komponenten kann verringert werden, was zu einer Kostenersparnis führt. Insgesamt ergibt sich eine erhebliche Reduktion des elektrischen Energieverbrauchs über reduzierte Stromwärmeverluste. Die Erfindung nutzt ferner Synergieeffekte zwischen neuen und bestehenden Technologien über deren räumliche und logistische Kopplung.

Die Erfindung betrifft, wie erwähnt, entsprechende elektrische Komponenten, die eine, vorzugsweise direkte, energetische Verbindung mit der Luftzerlegereinheit aufweisen. Eine derartige "energetische Verbindung" kann insbesondere mechanisch (z.B. in Form von Wellen oder mechanischen Antrieben) oder elektrisch (z.B. in Form entsprechender Zuleitungen) ausgebildet sein.

Vorteilhafterweise weist eine erfindungsgemäße Luftzerlegungsanlage einen Speicher auf, der durch die Luftzerlegereinheit mit dem tiefkalt verflüssigten Kälteträger gespeist werden kann, und dem dieser zur Speisung der Kühleinrichtung entnommen werden kann. Dies ermöglicht eine temporäre Abschaltung der Luftzerlegungsanlage, ohne dass ein entsprechend gekühlter Supraleiter erwärmt werden muss. Ein derartiger Speicher ist als Pufferbehälter ausgebildet, dem kontinuierlich oder zeitweise der tiefkalt verflüssigte Kälteträger zugeführt und zur Kühlung entnommen werden kann.

Der Einsatz eines entsprechenden Speichers ist insbesondere dann von Vorteil, wenn dieser zur Aufnahme und Abgabe eines tiefkalt verflüssigten Kälteträgers genutzt wird, der ansonsten dem Prozess noch nicht als Endprodukt entnommen werden kann. Beispielsweise können in bestimmten Betriebssituationen einer Luftzerlegungsanlage tiefkalt verflüssigte Kälteträger anfallen, die nicht die für ein Endprodukt erwünschte Reinheit aufweisen, deren Siedepunkt jedoch für eine Kühlung eines Supraleiters ausreicht. Insbesondere derartige Medien können in dem genannten Speicher (zwischen)gespeichert werden.

Anders als es die oben angegebenen Sprungtemperaturen vermuten lassen, werden Hochtemperatursupraleiter bei Leistungsanwendungen häufig bei Temperaturen unterhalb der Sprungtemperatur betrieben. Grund hierfür ist die gegenseitige Abhängigkeit der möglichen Transportströme, der kritischen Feldstärke und der Temperatur. Die Leistungsdaten der Hochtemperatursupraleiter können daher durch eine Absenkung der Temperatur verbessert werden.

Auch kann es, beispielsweise aus Kostengründen, erforderlich oder wünschenswert sein, einen Hochtemperatursupraleiter zu verwenden, dessen Sprungtemperatur oberhalb der Siedetemperatur des verwendeten tiefkalt verflüssigten Kälteträgers liegt.

Insbesondere in den genannten Fällen ist eine Luftzerlegungsanlage vorteilhaft, die Vakuummittel aufweist, die stromab der Luftzerlegereinheit angeordnet sind. Wird der Druck des tiekalt verflüssigten Kälteträgers verringert, verringert sich hierdurch auch sein Siedepunkt, so dass geringere Temperaturen zur Kühlung der Supraleiterstruktur zur Verfügung stehen

Hierbei umfassen die Vakuummittel vorteilhafterweise wenigstens einen Vakuumkompressor. Stromauf des wenigstens einen Vakuumkompressors wird damit eine Zone niedrigeren Drucks (Niederdruckbereich) geschaffen, aus der der tiefkalt verflüssigte Kälteträger zur Einspeisung in die Kühleinrichtung entnommen werden kann. Die Kühleinheit ist in den Niederdruckbereich eingebunden. Vorteilhafterweise ist der wenigstens eine Vakuumkompressor und/oder eine ebenfalls verwendbare Drosselvorrichtung stromauf des Vakuumkompressors regelbar ausgebildet, so dass eine definierte Siedetemperatur des tiefkalt verflüssigten Kälteträgers in der Zone niedrigeren Drucks je nach Bedarf eingestellt werden kann.

Da die Druckverringerung durch die Vakuummittel einen teilweisen Übergang des tiefkalt verflüssigten Kälteträgers in die Gasphase bewirkt, ist vorteilhafterweise stromauf eines Vakuumkompressors wenigstens ein Abscheider angeordnet, dem der tiefkalt verflüssigte Kälteträger zur Einspeisung in die Kühleinrichtung bodenseitig entnommen werden kann. Hierdurch wird sichergestellt, dass stets nur flüssiges Kühlmittel in die Kühleinrichtung eingespeist wird. Vorteilhafterweise kann als Abscheider der bereits zuvor erläuterte Speicher verwendet werden.

Wenigstens ein Vakuumkompressor kann vorteilhafterweise als Dampfstrahlkompressor ausgebildet sein und mit einem stromauf des Dampfstrahlkompressors abgezweigten und verdampften Anteil des tiefkalt verflüssigten Kälteträgers als Treibgas betrieben werden. Hierdurch lässt sich weitere Energie einsparen, weil ein entsprechender Dampfstrahlkompressor keine externe Zufuhr von Arbeit benötigt. Ein Dampfstrahlkompressor weist ferner keine mechanisch anfälligen Komponenten auf und kann daher weitgehend wartungsfrei betrieben werden.

Besonders vorteilhaft ist es, das Treibgas durch Verdampfung des Anteils des tiefkalt verflüssigten Kälteträgers mittels Abwärme der Luftzerlegungsanlage zu erzeugen. Hierdurch lassen sich die Verluste einer entsprechenden Anlage weiter verringern, indem die Abwärme sinnvoll genutzt wird. Zur Ausnutzung der Abwärme können übliche Abwärmeverdampfer zum Einsatz kommen.

Die Kühleinrichtung ist vorteilhafterweise vollständig in den Gaskreislauf, ggf. in dessen Niederdruckbereich, integriert, wobei der zumindest teilweise verdampfte, zuvor tiefkalt verflüssigte Kälteträger dem Vakuumkompressor saugseitig zugeführt werden kann. Wie erläutert umfassen Supraleiterstrukturen Kühlbehälter, in denen die entsprechenden Hochtemperatursupraleiter eingetaucht sind. Abdampfendes Kühlmittel kann dabei kontinuierlich abgezogen werden.

Die Luftzerlegungsanlage kann, wie erwähnt, insgesamt dazu eingerichtet sein, den verdampften, zuvor tiefkalt verflüssigten Kälteträger der Luftzerlegereinheit erneut zuzuführen. Zur Erzeugung des tiefkalt verflüssigten Kälteträgers wurde zuvor Energie aufgewandt, die somit zumindest teilweise im System verbleibt. Übersteigen dabei die bei der Kühlung in die Gasphase übergehenden Anteile des tiefkalt verflüssigten Kälteträgers die momentanen Kapazitäten der Luftzerlegereinheit, können Überschüsse auch anderweitig genutzt werden, beispielsweise in Wärmetauschern, oder dem System zur weiteren Verwendung entnommen werden.

Eine entsprechende Luftzerlegungsanlage kann eine Kühleinrichtung aufweisen, die dazu ausgebildet ist, einen direkten Kontakt zwischen der Supraleiterstruktur und dem tiefkalt verflüssigten Kälteträger herzustellen. Dies wurde bereits zuvor erläutert. Der Wärmetausch zwischen dem Supraleiter und dem tiefkalt verflüssigten Kälteträger kann z.B. durch Kanäle im Eisenkern von Spulen oder in Wicklungen oder in einem Tauchbad erfolgen. Es kann ein direkter Kontakt zwischen dem Supraleiter und dem tiefkalt verflüssigten Kälteträger bestehen oder es können Wärmeüberträgermaterialien vorgesehen sein.

In anderen Ausführungsformen kann auch zusätzlich zu der erläuterten Kühleinrichtung eine Wärmetransfereinrichtung vorgesehen sein, die dazu ausgebildet ist, einen zusätzlichen Wärmetausch vorzunehmen. Hierbei kann beispielsweise ein zusätzlicher Kühlkreislauf (Zwischenkreis) vorgesehen sein, z.B. mit Helium oder Stickstoff als Kältemittel. Hierbei findet zunächst ein Wärmetausch zwischen dem tiefkalt verflüssigten Kälteträger und dem Kühlmittel des zusätzlichen Kühlkreislaufs und anschließend ein Wärmetausch zwischen dem Kühlmittel des zusätzlichen Kühlkreislaufs einer zu kühlenden Struktur, z.B. einer Supraleiterstruktur, statt. Auf diese Weise kann, wenn der zusätzliche Kühlkreislauf eine noch weitere Abkühlung erlaubt, die Supraleiterstruktur auf noch tiefere Temperaturen gekühlt werden. Der zusätzliche Kühlkreislauf kann z.B. weitere Kompressoren und Wärmetauscher aufweisen, wobei der tiefkalt verflüssigte Kälteträger der Luftzerlegungsanlage dann im Wesentlichen zur Vorkühlung dient.

Wie bereits mehrfach erläutert, kann eine Luftzerlegungsanlage vorteilhafterweise Stickstoff als tiefkalt verflüssigten Kälteträger bereitstellen und verwenden. Stickstoff erlaubt eine ausreichende Kühlung, insbesondere von Hochtemperatursupraleitern, und ist als Inertgas unproblematisch in der Handhabung. Kommt stattdessen ein Gemisch von Stickstoff und Sauerstoff oder reiner Sauerstoff zum Einsatz, so können mit Hilfe der Vakuummittel tiefere Temperaturen erreicht werden, als dies für reinen Stickstoff der Fall wäre. Dieser Effekt wird durch die physikalischen Eigenschaften der genannten Medien bewirkt. Der Tripelpunkt von Stickstoff liegt bei 63,2 K und 0,125 bar, der Tripelpunkt von Sauerstoff bei 54,4 K und 0,00146 bar.

Die entsprechende Verwendung eines in einer zuvor erläuterten Luftzerlegungsanlage tiefkalt verflüssigten Kälteträgers, insbesondere von flüssigem Stickstoff, zur Kühlung einer Supraleiterstruktur einer elektrischen Einheit derselben Luftzerlegungsanlage ist ebenfalls Gegenstand der Erfindung. Wie erwähnt ist die elektrische Einheit energetisch an eine Luftzerlegereinheit der Luftzerlegungsanlage angebunden. Zu den Vorteilen sei auf die obigen Erläuterungen verwiesen.

Ein erfindungsgemäß ebenfalls vorgesehenes Verfahren zur Kühlung einer Supraleiterstruktur einer elektrischen Einheit einer zuvor erläuterten Luftzerlegungsanlage ist ebenfalls Gegenstand der Erfindung. Hierbei wird mittels einer Luftzerlegereinheit der Luftzerlegungsanlage ein tiefkalt verflüssigter Kälteträger erzeugt und zumindest teilweise in eine Kühleinrichtung der elektrischen Einheit eingespeist. Auch hier sei zu den Vorteilen auf die obigen Ausführungen verwiesen.

Wie erläutert, ist es zur Erreichung niedrigerer Temperaturen besonders vorteilhaft, den Druck des tiefkalt verflüssigten Kälteträgers vor der Verwendung zur Kühlung mittels der Kühleinrichtung von einem ersten Druckwert auf einen zweiten Druckwert zu verringern. Der erste Druckwert liegt dabei vorteilhafterweise in einem Bereich, der zwischen dem üblicherweise verwendeten Tankdruck für die in der Luftzerlegungsanlage gewonnenen Kälteträger von 1 bar und dem typischen Druck einer Hochdrucksäule der Anlage von 10 bar liegt. Beispielsweise kann ein derartiger Druckwert 1, 2, 3, 4, 5, 6, 7, 8, 9 oder 10 bar betragen. Der zweite Druckwert kann zwischen 2 und 150 mbar liegen und beträgt z.B. 2, 5, 10, 20, 30, 40, 60, 70, 80, 90, 100, 110, 120, 130, 140 oder 150 mbar. Die Siedetemperatur des tiefkalt verflüssigten Kälteträgers kann hierbei von -164 °C, der Siedetemperatur von unreinem Sauerstoff aus dem Sumpf einer Hochdrucksäule bei 10 bar, bis -196 °C, der Siedetemperatur von flüssigem Stickstoff bei 1 bar, auf -209 bis -218 °C verringert werden. Der Fachmann kann die jeweiligen Drücke und Temperaturen unschwer aus allgemein verfügbaren physikalischen Daten zu entsprechenden Gasen und Gasgemischen ermitteln.

Die Erfindung wird nachfolgend unter Bezugnahme auf die beigefügten Zeichnungen weiter erläutert, welche bevorzugte Ausführungsformen zeigen.

Kurze Beschreibung der Zeichnungen
Figur 1 zeigt eine Luftzerlegungsanlage gemäß einer Ausführungsform der Erfindung in schematischer Darstellung.
Figur 2 zeigt eine Luftzerlegungsanlage gemäß einer weiteren Ausführungsform der Erfindung in schematischer Darstellung.
Figur 3 zeigt eine Luftzerlegungsanlage gemäß einer weiteren Ausführungsform der Erfindung in schematischer Darstellung.

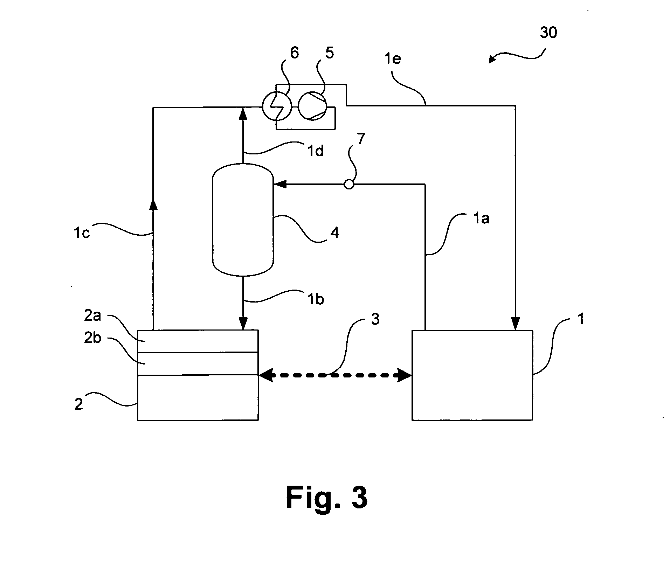

Figur 3 zeigt eine Luftzerlegungsanlage gemäß einer weiteren Ausführungsform der Erfindung in schematischer Darstellung.

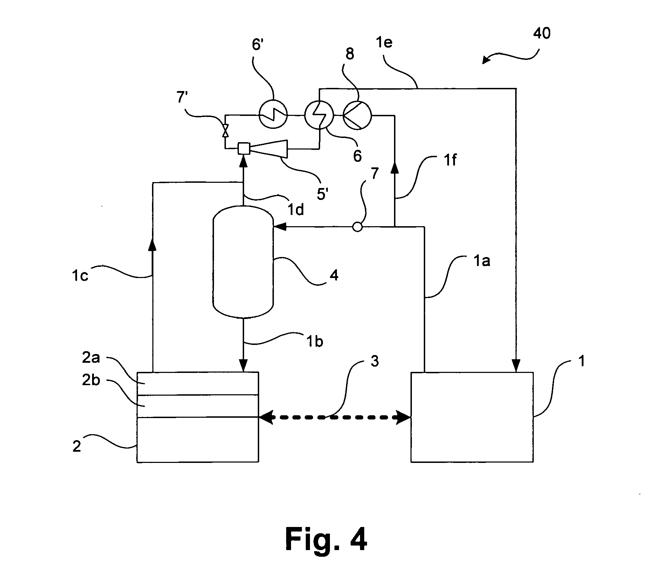

Figur 4 zeigt eine Luftzerlegungsanlage gemäß einer weiteren Ausführungsform der Erfindung in schematischer Darstellung.

### Ausführungsformen der Erfindung

Die Figuren zeigen Ausführungsformen der Erfindung, wobei gleiche oder gleichwirkende Elemente mit identischen Bezugszeichen angegeben sind. Auf eine wiederholte Erläuterung wird der Übersichtlichkeit halber verzichtet.

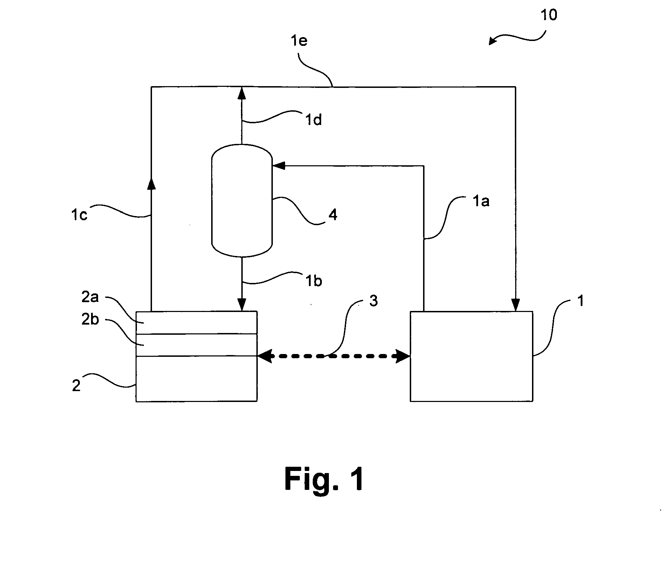

Figur 1 zeigt eine Luftzerlegungsanlage 10 gemäß einer Ausführungsform der Erfindung. Diese weist eine Luftzerlegereinheit 1 und eine elektrische Einheit 2 auf. Die elektrische Einheit 2 ist über eine energetische Verbindung 3, wie zuvor erläutert, direkt an die Luftzerlegereinheit 1 angebunden.

Die Luftzerlegereinheit 1 erzeugt wenigstens einen tiefkalt verflüssigten Kälteträger, beispielsweise flüssigen Stickstoff, und speist diesen über eine Leitung 1a in einen Speicher 4 ein. Der Speicher 4 dient, wie erläutert, einerseits als Puffertank und andererseits als Abscheider, der sicherstellt, dass der als Kältemittel zu verwendende tiefkalt verflüssigte Kälteträger in flüssiger Form vorliegt.

Vom Boden des Speichers 4 wird über eine Leitung 1 b der tiefkalt verflüssigte Kälteträger abgezogen und einer Kühleinrichtung 2a der elektrischen Einheit 2 zugeführt. Dort gelangt er in Kontakt mit einer Supraleiterstruktur 2b und kann diese kühlen.

Ein verdampfter Anteil des zuvor verflüssigten Kälteträgers wird über Leitung 1 c abgezogen. Ebenso wird ein verdampfter Anteil des zuvor verflüssigten Kälteträgers vom Kopf des Speichers 4 über Leitung 1d abgezogen. Die Gasströme aus den Leitungen 1 c und 1 d werden vorzugsweise in Leitung 1 e vereinigt und durch diese der Luftzerlegereinheit 1 erneut zugeführt.

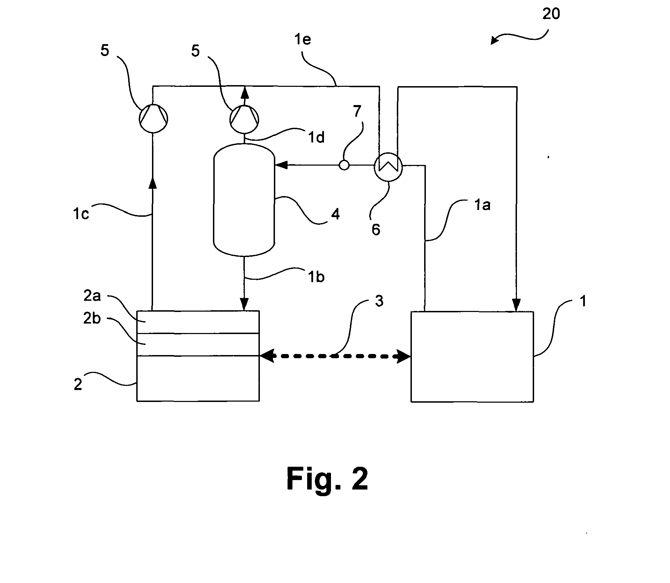

Figur 2 zeigt eine Luftzerlegungsanlage 20 gemäß einer weiteren Ausführungsform der Erfindung. Die Luftzerlegungsanlage 20 weist zusätzlich Vakuummittel auf.

Hierbei sind in den Leitungen 1c und 1d Vakuumkompressoren 5 vorgesehen. Es kann auch nur ein Vakuumkompressor 5 verwendet werden, wenn die Gasströme in den Leitungen 1 c und 1 d zuvor vereinigt werden. Hierdurch kann in den Leitungen 1 a, 1 b, 1 c und 1 d ein Unterdruck erzeugt werden, der, wie zuvor erläutert, den Siedepunkt des tiefkalt verflüssigten Kälteträgers verringert und damit geringere Temperaturen zur Kühlung in der Kühleinrichtung 2a ermöglicht. Hierzu kann eine Drosselvorrichtung 7 vorgesehen sein, die im Zusammenwirken mit den Vakuumkompressoren 5 einen Niederdruckbereich schafft. Ein Wärmetauscher 7 kann vorgesehen sein, der einen Wärmetausch zwischen den Leitungen 1a und 1e im Gegenstrom ermöglicht. Die Vakuumkompressoren 5, sowie zusätzliche Einrichtungen wie z.B. die Drosselvorrichtung 7 und/oder der Wärmetauscher 6, können mit Regelmitteln versehen sein, die eine Temperatur- und Durchflusseinstellung erlauben.

Figur 3 zeigt eine Luftzerlegungsanlage 30 gemäß einer weiteren Ausführungsform der Erfindung. Wie bereits im Zusammenhang mit der Luftzerlegungsanlage 20 angesprochen, werden hier die Gasströme aus den Leitungen 1c und 1d stromauf des Vakuumkompressors 5 vereinigt und diesem gemeinsam saugseitig zugeführt. Zusätzlich ist hier mittels eines Wärmetauschers 6 ein sogenannter innerer Wärmetausch zwischen Saug- und Druckseite des Vakuumkompressors 5 möglich. Dies erlaubt den Einsatz konventioneller Vakuumtechnik, die nicht für kryogene Temperaturen eingerichtet sein muss und deshalb kostengünstig und wartungsfreundlich ist.

Figur 4 zeigt eine Luftzerlegungsanlage 40 gemäß einer weiteren Ausführungsform der Erfindung. Bei der Luftzerlegungsanlage 40 ist der Vakuumkompressor 5 als Dampfstrahlkompressor 5' ausgebildet.

Dampfstrahlkompressoren 5', auch als Strahlverdichter bezeichnet, sind grundsätzlich bekannt. Sie werden mit einem sogenannten Treibgas betrieben, das dem Dampfstrahlkompressor 5' (hier in zunächst in flüssiger Form über Leitung 1f) unter Druck zugeführt wird, und das in einer Vakuumleitung (hier in Leitung 1 d) einen Unterdruck erzeugt. Zur Erzeugung des Treibgases wird mittels einer Drosselvorrichtung 7 und einer Pumpe 8 aus Leitung 1a ein Teilstrom des tiefkalt verflüssigten Kälteträgers abgezweigt und über die Leitung 1f einem Wärmetauscher 6 zugeführt. Der dort verdampfte Kälteträger gelangt über eine weitere Drosselvorrichtung 7' als Treibgas in den Dampfstrahlkompressor 5'. Druckseitig des Dampfstrahlkompressors 5' ist ein weiterer Wärmetauscher 6 vorgesehen, der eine Abkühlung des aus dem Dampfstrahlkompressor 5' austretenden Gasstroms im Gegenstrom zu dem tiefkalt verflüssigten Kälteträger in Leitung 1f ermöglicht. Dies erlaubt eine energetisch günstige Vorkühlung vor der Einspeisung in die Verflüssigungseinheit 1 über Leitung 1e. Vorteilhafterweise wird zur Erzeugung des Treibgases, z.B. mittels des Wärmetauschers 6', Abwärme der Luftzerlegungsanlage 40 verwendet.

Zusätzlich zu dem erläuterten direkten Wärmetausch zwischen einem tiefkalt verflüssigten Kälteträger und der Supraleiterstruktur 2b kann auch ein Zwischenkreislauf, z.B. in Form eines Heliumzwischenkreislaufs, vorgesehen sein. Wie bereits zuvor erläutert, kann hierbei zunächst ein Wärmetausch zwischen dem tiefkalt verflüssigten Kälteträger in der Kühleinheit 2a und dem Zwischenkreislauf und anschließend zwischen dem Zwischenkreislauf und einer zu kühlenden Struktur erfolgen. Der Zwischenkreislauf kann weitere Kälteeinrichtungen umfassen, so dass dort weitere Wärme entzogen werden kann. Dies erlaubt z.B. den Einsatz von Supraleitern mit niedrigeren Sprungtemperaturen, die kostengünstiger hergestellt werden können.

### Bezugszeichenliste

- 1: Luftzerlegereinheit
- 1a-f: Leitungen
- 2: elektrische Einheit
- 2a: Kühleinrichtung
- 2b: Supraleiterstruktur
- 3: energetische Anbindung
- 4: Speicher
- 5,5': Vakuumkompressor
- 6,6': Wärmetauscher
- 7,7': Drosselvorrichtungen
- 8: Pumpe

## Patentansprüche

1. Luftzerlegungsanlage (10, 20, 30, 40) mit einer Luftzerlegereinheit (1), die einen tiefkalt verflüssigten Kälteträger bereitstellen kann, und mit einer elektrischen Einheit (2) mit einer Supraleiterstruktur (2b), wobei die elektrische Einheit (2) über eine energetische Verbindung (3) an die Luftzerlegereinheit (1) angebunden ist und eine Kühleinrichtung (2a) aufweist, wobei die Kühleinrichtung (2a) dazu ausgebildet ist, die Supraleiterstruktur (2b) unter Verwendung zumindest eines Teils des tiefkalt verflüssigten Kälteträgers aus der Luftzerlegereinheit (1) zu kühlen.

2. Luftzerlegungsanlage (10, 20, 30, 40) nach Anspruch 1, mit wenigstens einem Speicher (4), der durch die Luftzerlegereinheit (1) mit dem tiefkalt verflüssigten Kälteträger gespeist werden kann, und dem der tiefkalt verflüssigte Kälteträger zur Speisung der Kühleinrichtung (2a) entnommen werden kann.

3. Luftzerlegungsanlage (10, 20, 30, 40) nach Anspruch 1 oder 2, die stromab der Luftzerlegereinheit (1) angeordnete Vakuummittel (5 - 8) aufweist, die dazu ausgebildet sind, den tiefkalt verflüssigten Kälteträger zur Verwendung in der Kühleinrichtung (2a) mit verringertem Druck bereitzustellen.

4. Luftzerlegungsanlage (10, 20, 30, 40) nach Anspruch 3, bei der die Vakuummittel (5 - 8) wenigstens einen Vakuumkompressor (5, 5') umfassen, wobei der tiefkalt verflüssigte Kälteträger stromauf des wenigstens einen Vakuumkompressors (5, 5') zur Verwendung in der Kühleinrichtung (2a) mit verringertem Druck entnommen werden kann.

5. Luftzerlegungsanlage (10, 20, 30, 40) nach Anspruch 4 oder 5, bei der der wenigstens eine Vakuumkompressor (5, 5') als Dampfstrahlkompressor (5') ausgebildet ist, der mit einem stromauf des Dampfstrahlkompressors (5') abgezweigten und verdampften Anteil des tiefkalt verflüssigte Kälteträgers als Treibgas betrieben werden kann.

6. Luftzerlegungsanlage (10, 20, 30, 40) nach Anspruch 5, bei dem das Treibgas durch Verdampfung des Anteils des tiefkalt verflüssigten Kälteträgers mittels Abwärme der Luftzerlegungsanlage (10, 20, 30, 40) erzeugt werden kann.

7. Luftzerlegungsanlage (10, 20, 30, 40) nach einem der Ansprüche 4 bis 6, bei dem ein in der Kühleinrichtung (2a) verdampfter Anteil des zuvor tiefkalt verflüssigten Kälteträgers dem Vakuumkompressor (5, 5') saugseitig zugeführt werden kann.

8. Luftzerlegungsanlage (10, 20, 30, 40) nach einem der vorstehenden Ansprüche, bei der der zumindest teilweise verdampfte, zuvor tiefkalt verflüssigte Kälteträger der Luftzerlegereinheit (1) erneut zugeführt werden kann.

9. Luftzerlegungsanlage (10, 20, 30, 40) nach einem der vorstehenden Ansprüche, wobei die Kühleinrichtung (2a) dazu ausgebildet ist, einen direkten Kontakt zwischen der Supraleiterstruktur (2b) und dem tiefkalt verflüssigten Kälteträger herzustellen.

10. Luftzerlegungsanlage (10, 20, 30, 40) nach einem der vorstehenden Ansprüche, die zusätzlich eine Wärmetransfereinrichtung aufweist, die dazu ausgebildet ist, einen Wärmetransfer zwischen der Kühleinrichtung (2a) und einer Supraleiterstruktur (2b) vorzunehmen.

11. Luftzerlegungsanlage (10, 20, 30, 40) nach einem der vorstehenden Ansprüche, die dazu ausgebildet ist, flüssigen Stickstoff, flüssigen Sauerstoff oder deren Gemische als den tiefkalt verflüssigten Kälteträger zu verwenden.

12. Verwendung eines in einer Luftzerlegungsanlage (10, 20, 30, 40) nach einem der vorstehenden Ansprüche erzeugten, tiefkalt verflüssigten Kälteträgers, insbesondere flüssigem Stickstoff, zur Kühlung einer Supraleiterstruktur (2b) einer elektrischen Einheit (2) derselben Luftzerlegungsanlage (10, 20, 30, 40), wobei die elektrische Einheit (2) energetisch an eine Luftzerlegereinheit (1) der Luftzerlegungsanlage (10, 20, 30, 40) angebunden ist.

13. Verfahren zur Kühlung einer Supraleiterstruktur (2b) einer elektrischen Einheit (2) einer Luftzerlegungsanlage (10, 20, 30, 40) gemäß einem der Ansprüche 1 bis 11, wobei mittels einer Luftzerlegereinheit (1) der Luftzerlegungsanlage (10, 20, 30, 40) ein tiefkalt verflüssigter Kälteträger erzeugt und zumindest teilweise in eine Kühleinrichtung (2a) der elektrischen Einheit (2) eingespeist wird.

14. Verfahren nach Anspruch 13, wobei ein Druck des tiefkalt verflüssigten Kälteträgers vor der Verwendung zur Kühlung in der Kühleinrichtung (2a) von einem ersten Druckwert auf einen zweiten Druckwert verringert wird.

15. Verfahren nach Anspruch 14, wobei der erste Druckwert 1 bis 10 bar und der zweite Druckwert 2 bis 150 mbar beträgt und/oder eine Siedetemperatur des tiefkalt verflüssigten Kälteträgers bei dem ersten Druckwert -164 bis -196 °C und bei dem zweiten Druckwert -196 bis -218 °C beträgt.
